# EUROPEAN PATENT SPECIFICATION

(11) **EP 4 169 362 B1**
(45) Date of publication and mention of the grant of the patent: **08.01.2025**
(21) Application number: 20761648.3
(22) Date of filing: 19.06.2020
(51) Int. Cl.: A01B 13/02, A01B 49/06, A01B 63/02, A01B 63/111, A01C 5/06, A01C 7/06, A01C 7/20

(54) **AGRICULTURAL AND FORESTRY IMPLEMENT FOR PLANTING AND FERTILISNG**
LAND- UND FORSTWIRTSCHAFTLICHES GERÄT ZUM PFLANZEN UND DÜNGEN
ÉQUIPEMENT AGRICOLE ET FORESTIER POUR LA PLANTATION ET LA FERTILISATION

(43) Date of publication of application: 26.04.2023
(73) Proprietor: Fravizel - Equipamentos Metalomecânicos SA, 2025-999 Alcanede (PT)
(72) Inventor: VICENTE FRAZÃO, Eliseu Manuel, 2025-161 ALCANEDE (PT)
(74) Representative: do Nascimento Gomes, Rui
(86) International application number: PCT/PT2020/050025
(87) International publication number: WO 2021/256944

(56) References cited:
- CN-A- 102 626 007
- CN-A- 104 472 032
- CN-A- 105 432 168
- CN-U- 205 232 716
- FR-A1- 2 713 434
- KR-A- 20150 042 582
- US-A1- 2011 011 316

## Description

### FIELD OF INVENTIONS

The present invention relates to an agricultural and forestry implement, more precisely an agricultural and forestry implement for soil preparation and planting, and in particular an agricultural implement for digging ditches and fertilising for forestry use.

### SUMMARY OF THE INVENTION

The present invention relates to an agricultural implement for planting and fertilising which, by means of the traction power of the machine to which it is coupled via the coupling device (1), opens a ditch by means of a ripper (6) or subsoiler. This ripper (6) is height-adjustable by means of a first coupling pin (14) which is a coupling pin and a trapezoidal chassis (3). The rotation device enables the ripper to adapt to soil irregularities (4), whereby the ripper (6) comprises a second chassis (5) can rotate briefly around the rotation axis (4) and movements and horizontal adjustments are possible by means of two horizontal actuators (2) . When the ditch is excavated, a layer of aggregates should be formed on the sides of the ditch, for which purpose this invention comprises two wheels/ridging plough (12), each having a second coupling pin (10) between the chassis of the ripper (6) and a third chassis (13) of the ridging plough (12). In a preferred model of the invention, the device may comprise a hopper (7) for storing the fertiliser, which is driven onto the ground by means of a feeder (8) and is operated in the furrows by a wheel (9).

### BACKGROUND OF THE INVENTION

Over the years, several devices have been developed to combine two or more operations, reducing the cost and time required for ground preparation while increasing the efficiency of the operation.

US patent document US2011/0011316 discloses an agricultural implement for soil preparation and planting which, like the present invention, has two wheels which serve to cover the ditch opened by the implement, i.e., to compact the soil after seed distribution. For soil penetration, i.e., to open the ditch, the implement has two side disks that penetrate the soil and form a ditch, but these are not suitable for forest plantation in harder or stony soils, with the disadvantage that they are not adjustable. This implement differs from the present invention in that it does not allow side adjustment of the discs, nor does it offer a trapezoidal lifting system to adapt to uneven ground or the possibility of an integrated fertiliser system.

The patent application no. FR2713434 discloses a prior art solution in which a ridging plough is constructed on a support chassis (2), suitable to be drawn behind a tractor (3). It is therefore within the same area as the present invention, providing an agricultural implement with a similar objective of digging ditches and fertilising for forestry use, but which fails to provide a terrain adaptation and the other advantages of the present solution.

### TECHNICAL PROBLEMS TO BE SOLVED

At present, the planting process, or as in the specialty, forest planting, is carried out using excavation machines with large buckets, varying between 500-1200 mm, which stir up the soil too much, damaging the soil and as a result hollow it out, and during the planting process, for example, the seed, tree or plant does not develop. This problem is solved with the present invention by using a ripper (6) or subsoiler at least 50 mm wide, which penetrates 400-600 mm into the ground and opens a ditch. The ripper (6) also solves the common problem of the difficulty of penetrating and/or stirring up very hard soils.

Soil irregularities, especially in typical forest soils, make it difficult to apply common planting practices, such as planting typical of agriculture. Adaptation to these soil irregularities is solved by the invention's rotation device (4), which allows the second chassis (5) of the ripper (6) to undergo short rotational movements (e.g. when picking up a stone from the subsoil) and horizontal movements/adjustments by means of two horizontal actuators (2), which allow the implement to move according to the ground topography. This also ensures that the furrow is maintained by the adaptability of the implement to the soil, e.g. on slopes or when opening a furrow in an arch.

Another similar typical problem is the volume of soil removed when the furrow is excavated, which can be many times greater than the desired volume, leading to soil erosion. This problem is solved by adjusting the disc ridger (12), which can be opened and closed by means of second actuators (11).

Last but not least, the problem of manual or mechanical fertilisation by seed drills due to the uneven distribution of the seeds is solved by installing, in a preferred model of the invention, a hopper (7) for storing the fertiliser, which is then fed to the soil by means of a feeder (8) connected to the hopper (7) and directed towards the furrow by means of a wheel (9), the tip of the feeder (8) being coupled or connected to the wheel (9).

The present invention provides an agricultural implement according to claim 1. Further aspects of the invention are defined in the dependent claims.

### BRIEF DESCRIPTION OF THE FIGURES

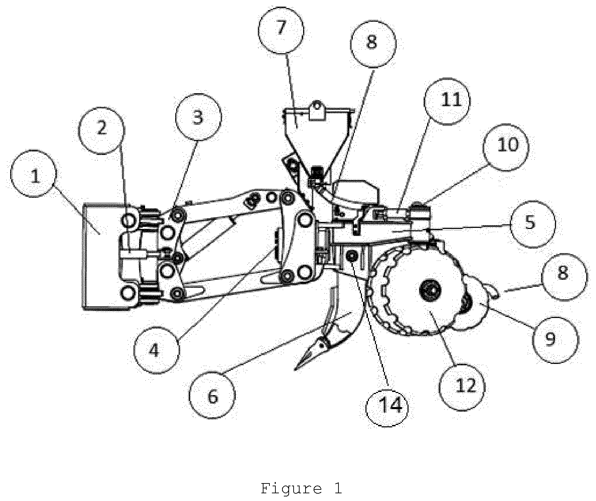

Figure 1 - Side view of the agricultural implement, showing the following components: connecting device (1), horizontal actuators (2), trapezoidal chassis (3), rotating device (4), ripper (6) and its second chassis (5), hopper (7) for storing the fertiliser, fed to the soil by means of a feeder (8). Figure 1 also shows the wheel (9), which guides the fertiliser, the second coupling pin (10) between the second chassis (5) of the ripper (6) and a chassis of the disc or ridging ploughs (12), second actuators (11) for opening and closing the ridging ploughs (12), and the first coupling pin (14) for adjusting the height of the ripper (6) .

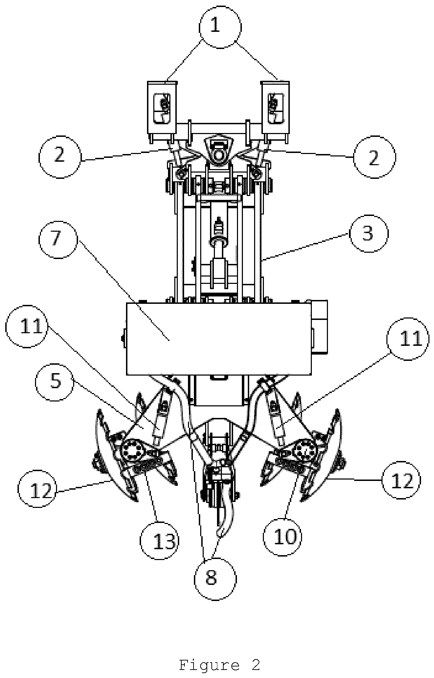

Figure 2 - Top view of the agricultural implement, showing, in addition to the components represented in Figure 1, the third chassis (13) of the wheels or ridging discs (12). It is clear from this picture that the wheel (9) is aligned with the planting furrow, i.e. between the ridging wheels/discs (12), and guides the tip of the fertiliser feeder (8).

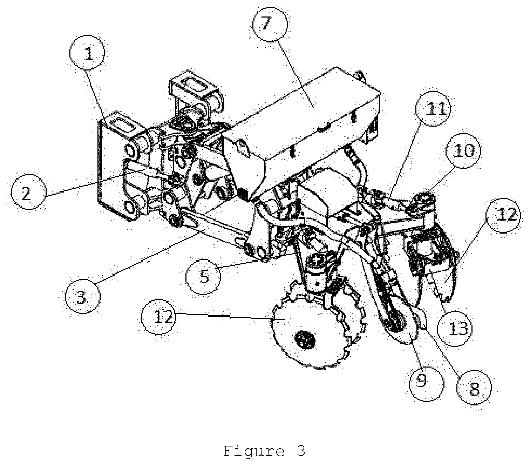

Figure 3 - View of the agricultural implement, showing, all components represented in figures 1 and 2.

### DESCRIPTION OF THE INVENTION

The aim of this invention is to provide foresters with a versatile, robust, effective and efficient fertilising and planting system, in particular for forest planting, i.e. of trees, but not limited thereto, and that with the aid of this invention this implement can be adapted to existing machinery by means of the coupling device (1) which can be connected or attached to other machines.

Thus, the present invention makes it possible to open a ditch by means of a ripper(6) or subsoiler using the traction power of the machine, e.g. a tractor, to which the agricultural implement of the invention is coupled or attached or set up by means of a coupling device (1). This ripper (6) is height-adjustable by means of a first coupling pin (14) and a trapezoidal chassis (3) and enables ditches of different depths to be opened.

The coupling device (1) is rotatably attached to a trapezoidal chassis (3) about a vertical axis of the agricultural implement, the trapezoidal chassis (3) being rotatable relative to the coupling device (1) by means of two horizontal actuators (2) located between the trapezoidal chassis (3) and the coupling device (1).

The implement subject of this invention adapts to the ground because it is connected to the ripper (6) by means of a rotating device (4) which allows the second chassis (5) of the ripper (6) to rotate briefly around the rotation axis. These movements are also possible because the implement has two horizontal actuators between the device (1) connected to the machine and the trapezoidal chassis (3) allowing the implement to move according to the ground topography. These horizontal actuators (2) allow the agricultural implement to move sideways and thus efficiently control the opening of the furrow, as it adapts to the soil and the components also move along the furrow, without any deviation along the furrow due to ground unevenness.

The second chassis (5) of the ripper (6) rotates about a second axis parallel to a working direction of the implement.

When digging the ditch, a layer of aggregates should be formed at the edges of the ditch. After planting of the seeds, trees or plants, this layer must be filled back into the ditch to ensure the efficiency of the plantation. In order to form this layer of aggregates, this invention comprises two wheels/ridging discs (12), each having a second coupling pin (10) between the second chassis (5) of the ripper (6) and a third chassis (13) of the ridging discs (12).

The ridging discs (12) can be adjustable by means of the second actuators (11) which enable the rotation of the third chassis (13) of the ridging discs (12) around the third axis of the second coupling pin (10). As the ridging discs (12) are adjustable, the ditch bed formed for the desirable crop can be controlled, in addition to the fact that the ripper (6) is height-adjustable, also allowing to control the depth of the excavated ditch and, as such, the amount of aggregates dug out onto the ditch sides.

In short, this invention consists of a coupling device (1) that can be attached to other machines and to a trapezoidal chassis (3) by means of two horizontal actuators (2) situated between the trapezoidal chassis (3) and the coupling device (1); at least one ripper (6), height-adjustable by means of a first coupling pin (14) and of a trapezoidal chassis (3); this ripper (6) comprises a second chassis (5) which can be fixed to the trapezoidal chassis (3) by means of a rotating device (4), allowing the second chassis (5) of the ripper (6) to move; and at least two ridging discs (12), each of which has a third chassis (13) and a second coupling pin (10) connecting the second chassis (5) of the ripper (6) to the third chassis (13) of the ridging discs (12). The ridging discs (12) are adjustable by means of the second actuators (11), thus enabling the third chassis (13) of the ridging discs (12) to rotate around the axis of the second coupling pin (10).

In a preferred model of the invention, this invention comprises a hopper (7) for storing fertiliser, which is fed to the soil by means of a feeder (8), at least one of the tips of which is connected to the hopper (7) and another is coupled or connected to a wheel (9) aligned with the furrow, i.e. between the wheels/ridging discs (12) guiding the fertiliser to the furrow.

## Claims

1. Agricultural implement wherein it comprises a coupling device attachable to other machines, at least one ripper which is height-adjustable and at least two ridging discs (12), each of which having a third chassis (13),
**characterised in that:**
a) the coupling device (1) is rotatably attached to a trapezoidal chassis (3) about a vertical axis of the agricultural implement, the trapezoidal chassis (3) being rotatable relative to the coupling device (1) by means of two horizontal actuators (2) located between the trapezoidal chassis (3) and the coupling device (1);
b) the at least one ripper (6) is height-adjustable by means of a first pin (14) and of the trapezoidal chassis (3), said ripper (6) comprising a second chassis (5) connected to the trapezoidal chassis (3) by means of a rotating device (4), allowing the second chassis (5) of the ripper (6) to move, rotating about a second axis parallel to a working direction of the implement;
c) each of the at least two ridging discs (12) further have a second pin (10) connecting the second chassis (5) of the ripper (6) to the third chassis (13) of the ridging discs (12); and
d) the ridging discs (12) are adjustable by means of second actuators (11), thus enabling the third chassis (13) of the ridging discs (12) to rotate around a third axis of the second pin (10).

2. Agricultural implement according to claim 1, further comprising at least one hopper (7), at least one feeder (8) wherein at least one tip of the feeder is connected to the hopper (7) and at least one other tip of the feeder is connected to a wheel (9), said wheel (9) located on the ridging discs (12).

3. Agricultural implement in accordance with the preceding claims wherein the ripper (6) has at least 50 mm wide.

## Patentansprüche

1. Landwirtschaftliches Gerät, das eine an andere Maschinen anbaubare Kupplungsvorrichtung, mindestens einen höhenverstellbaren Aufreißer und mindestens zwei Dammformscheiben (12) aufweist, von denen jede ein drittes Fahrgestell (13) hat, **dadurch gekennzeichnet, daß:**
a) die Kupplungsvorrichtung (1) an einem trapezförmigen Fahrgestell (3) um eine vertikale Achse des landwirtschaftlichen Geräts drehbar befestigt ist, wobei das trapezförmige Fahrgestell (3) mittels zweier horizontaler Stellglieder (2), die zwischen dem trapezförmigen Fahrgestell (3) und der Kupplungsvorrichtung (1) angeordnet sind, relativ zur Kupplungsvorrichtung (1) drehbar ist;
b) der mindestens eine Aufreißer (6) mittels eines ersten Bolzens (14) und des trapezförmigen Fahrgestells (3) höhenverstellbar ist, wobei der Aufreißer (6) ein zweites Fahrgestell (5) aufweist, das mit dem trapezförmigen Fahrgestell (3) mittels einer Drehvorrichtung (4) verbunden ist, die es dem zweiten Fahrgestell (5) des Aufreißers (6) ermöglicht, sich um eine zweite Achse parallel zu einer Arbeitsrichtung des Geräts zu drehen;
c) jede der mindestens zwei Dammformscheiben (12) weist außerdem einen zweiten Bolzen (10) auf, der das zweite Fahrgestell (5) des Aufreißers (6) mit dem dritten Fahrgestell (13) der Dammformscheiben (12) verbindet; und
d) die Dammformscheiben (12) mittels zweiter Stellglieder (11) verstellbar sind, so dass sich das dritte Fahrgestell (13) der Dammformscheiben (12) um eine dritte Achse des zweiten Bolzens (10) drehen kann.

2. Landwirtschaftliches Gerät nach Anspruch 1, ferner umfassend mindestens einen Trichter (7), mindestens einen Zubringer (8), wobei mindestens eine Spitze des Zubringers mit dem Trichter (7) verbunden ist und mindestens eine andere Spitze des Zubringers mit einem Rad (9) verbunden ist, wobei das Rad (9) auf den Dammformscheiben (12) angeordnet ist.

3. Landwirtschaftliches Gerät nach den vorhergehenden Ansprüchen, wobei der Aufreißer (6) eine Breite von mindestens 50 mm aufweist.

## Revendications

1. Appareil agricole, lequel comprend un dispositif d'attelage pouvant être fixé à d'autres machines, au moins un ripper réglable en hauteur et au moins deux disques de buttage (12), chacun ayant un troisième châssis (13), **caractérisé en ce que :**
a) le dispositif d'attelage (1) est fixé de manière rotative à un châssis trapézoïdal (3) autour d'un axe vertical de l'appareil agricole, le châssis trapézoïdal (3) pouvant tourner par rapport au dispositif d'attelage (1) par moyen de deux actionneurs horizontaux (2) situés entre le châssis trapézoïdal (3) et le dispositif d'attelage (1) ;
b) l'au moins un ripper (6) est réglable en hauteur par moyen d'une première goupille (14) et du châssis trapézoïdal (3), ledit ripper (6) comprenant un second châssis (5) relié au châssis trapézoïdal (3) par moyen d'un dispositif rotatif (4), permettant au second châssis (5) du ripper (6) de se déplacer, en tournant autour d'un second axe parallèle à une direction de travail de l'appareil;
c) chacun des au moins deux disques de buttage (12) comporte en outre une deuxième goupille (10) reliant le deuxième châssis (5) du ripper (6) au troisième châssis (13) des disques de buttage (12) ; et
d) les disques de buttage (12) sont réglables au moyen de seconds actionneurs (11), permettant ainsi au troisième châssis (13) des disques de buttage (12) de tourner autour d'un troisième axe de la deuxième goupille (10).

2. Appareil agricole selon la revendication 1, comprenant en outre au moins une trémie (7), au moins un alimentateur (8) dans lequel au moins une extrémité de l'alimentateur est reliée à la trémie (7) et au moins une autre extrémité de l'alimentateur est reliée à une roue (9), ladite roue (9) étant située entre les disques de buttage (12).

3. Appareil agricole selon les revendications précédentes, dans lequel le ripper (6) a une largeur d'au moins 50 mm.
